# EUROPÄISCHE PATENTSCHRIFT

(11) **EP 1 837 540 B1**
(45) Veröffentlichungstag und Bekanntmachung des Hinweises auf die Patenterteilung: **20.10.2010**
(21) Anmeldenummer: 06005847.6
(22) Anmeldetag: 22.03.2006
(51) Int. Cl.: F16C 33/66

(54) **Lager mit porösem Element zur Aufnahme von Schmiermittel**
Bearing with porous element for absorption of lubricant
Palier avec un élément en matériau poreux pour absorption de lubrifiant

(43) Veröffentlichungstag der Anmeldung: 26.09.2007
(73) Patentinhaber: Paul Müller GmbH & Co. KG Unternehmensbeteiligungen, 90411 Nürnberg (DE)
(72) Erfinder: Feldmeier, Fritz, Dr., 90475 Nürnberg (DE)
(74) Vertreter: Lösch, Christoph Ludwig Klaus

(56) Entgegenhaltungen:
- EP-A- 0 654 613
- FR-A- 2 444 225
- US-A- 3 645 592
- US-B1- 6 616 336

## Beschreibung

Die Erfindung betrifft ein Lagerelement mit Wälzkörpern, mit einer inneren Laufbahn, einer äußeren Laufbahn und zwischen der inneren und der äußeren Laufbahn drehbar angeordneten benachbarten Wälzkörpern.

Die EP 0 654 613 A1 zeigt ein Lagerelement mit drehbar angeordneten Wälzkörpern, einem Käfig zur Halterung der Wälzkörper und poröse Elemente zur Aufnahme von Schmiermittel.

Der Erfindung liegt die Aufgabe zugrunde, ein Lager mit besonders vorteilhaften Schmierungseigenschaften anzubieten.

Diese Aufgabe wird durch die Merkmale des Patentanspruchs 1 gelöst. Vorteilhafte Varianten der Vorrichtung werden in den Unteransprüchen beschrieben.

Rotierende Maschinenteile bewegen sich im allgemeinen mit einer Rotationsgeschwindigkeit zu der Umgebung, an der sie befestigt sind. Die Verbindung ist eine drehbare Lagerung, die bei hohen Rotationsgeschwindigkeiten üblicherweise Wälzlagerungen bekannter Bauart sind. Um die Drehfähigkeit über lange Zeit aufrechtzuerhalten, müssen die Lager geschmiert werden. Bei den überwiegenden Anwendungsfällen steht das äußere Teil des Lagers, der äußere Lagerring, fest im Gehäuse und das rotierende Maschinenteil, im allgemeinen die Welle mit oder ohne inneren Lagerring dreht sich.

Die Geschwindigkeitsunterschiede zwischen äußerem und innerem Lagerring des Lagers haben in den oberflächennahen Luftgrenzschichten eine unterschiedliche Druckzusammensetzung zur Folge.

Gemäß der Kontinuitätsgleichung für strömende Medien (Satz von Bernoulli) herrscht am stillstehenden bzw. langsamer bewegten äußeren Lagering ein höher statischer Druck als am schnelldrehenden inneren Lagerring. Dies hat zur Folge, daß im Grenzschichtbereich des inneren Lagerrings eine Saugwirkung im Lagerinneren besteht, während im Grenzschutzbereich des äußeren Lagerrings der Umgebungsdruck herrscht.

Durch die Zentrifugalkraft der mit dem inneren Lagerring rotierenden Luftschicht, verstärkt durch die ebenfalls mitrotierenden Wälzkörper, bildet sich eine Art Radialgebläse aus, wodurch die Luft entgegen dem Druckgefälle nach Bemoulli zum äußeren Lagerring gedrückt wird und nach außen abfließt.

An der seitlich abgedichteten Lagerstelle, bei der die seitliche Dichtscheibe dicht am äußeren Lagerring anliegt, strömt die Luft wieder radial in Richtung innerer Lagerring zurück, so daß sich im Lagerinneren eine Strömungskomponente ausbildet, die für sich betrachtet, im Zwischenraum zwischen innerem und äußerem Lagerring auf beiden Seiten des Wälzkörperkranzes gegenläufig zueinander aber parallel zur Achse der Welle rotiert.

Diese Strömung wird von der durch die Rotation verursachte Tangentialkomponente überlagert, so daß von einer wendelförmigen Luftbewegung an beiden Seiten der Lagerstelle auszugehen ist. Diese Strömung mit den damit verbundenen Druckdifferenzen kann zum Schmiermitteltransport im Lager ausgenutzt werden.

Das erfindungsgemäße Lagerelement hat im Zwischenraum, vom äußeren und inneren Lagerring befestigt, offenporige und gasdurchlässige poröse Elemente, die direkt mit dem stehenden oder langsamer rotierenden Lagerring verbunden sind. Diese porösen Elemente können aus einem schwammartigen, saugfähigen Material auf textiler oder Kunststoffbasis bzw. aus Metallwolle, Sinterwerkstoff oder Metallschaum bestehen.

Diese porösen Elemente sind mit einem für die spezielle Anwendung des Lagers optimal geeigneten Schmiermittel (z.B. mit geringer Oberflächenspannung und guter Fließfähigkeit) getränkt. Die vorbeiströmende Luft und die durch die Zentrifugalkräfte erzeugten z.T. erheblichen Druckunterschiede vom äußeren zum inneren Lagerring transportieren das Schmiermittel in den Kontaktbereich der Wälzkörper mit den Lagerringen.

Durch einen Ringspalt zwischen rotierender Welle und porösen Elementen bzw. durch die seitliche Abdeckung wird die zu ergänzende Leckluft ins Lager gesaugt. Durch geeignete konstruktive Maßnahmen (z.B. Wahl der Porengröße) kann die transportierte Schmiermittelmenge eingestellt werden.

Ebenso kann durch geeignete Gestaltung des Käfigs (Wälzkörperkäfigs) die Ventilatorvorrichtung im Lager beeinflußt werden. Der Wälzkörperkäfig kann so gestaltet werden, daß das Schmiermittel gezielt in den Kontaktbereich Wälzkörper und in die Laufbahn gelenkt wird.

Die Erfindung ist anhand eines Ausführungsbeispiels in den Zeichnungsfiguren weiter erläutert. Es zeigen:
- Fig. 1: eine schematische Schnittdarstellung einer Ausführungsform eines Lagerelements,
- Fig. 2: eine schematische Schnittdarstellung einer Ausführungsform eines Käfigs eines Lagerelements,
- Fig. 3: eine schematische Schnittdarstellung einer weiteren Ausführungsform eines Käfigs eines Lagerelements,
- Fig. 8: eine schematische Schnittdarstellung einer weiteren Ausführungsform eines Käfigs eines Lagerelements sowie
- Fig. 9: eine schematische Schnittansicht A-A von Fig. 8.

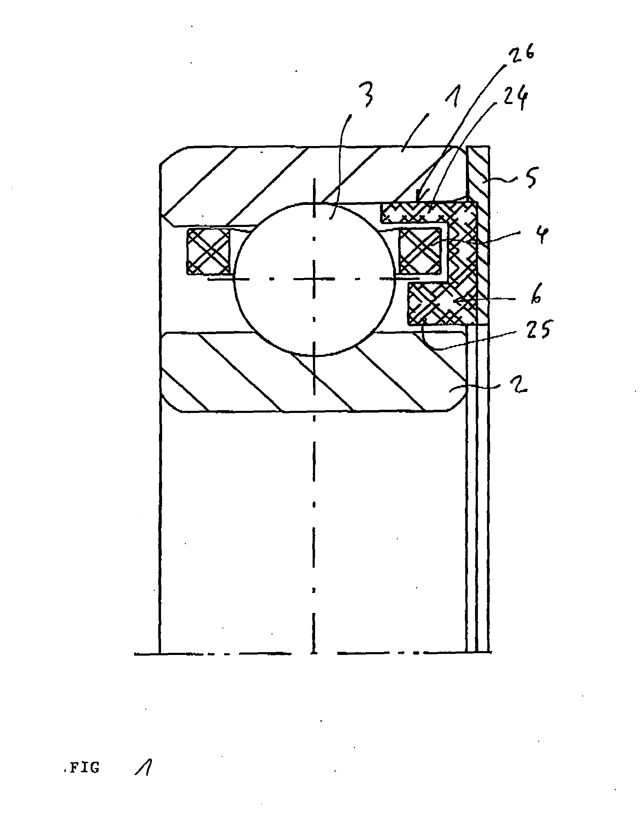

Fig. 1 zeigt ein Lagerelement 7 mit einem Außenring 1, einem Innenring 2, Wälzkörper 3 und einem Käfig 4 (Wälzkörperabstandshalter).

Das Lagerelement 7 weist ferner einen seitlich angeordneten umlaufenden Ring 5 (z.B. Distanzring) auf. Am Ring 5 ist ein insbesondere umlaufendes poröses Element 6 angebracht , dessen Poren mit flüssigem Schmiermittel (z.B. Öl) gefüllt sind.

Bei schneller Drehung z.B. des Innenrings 2 herrscht in der Grenzschicht 9 ein Druck, der um den Geschwindigkeitsdruck pᵥ aus der Innendrehung kleiner als der Umgebungsdruck pₒ, so daß durch den Spalt 8 Luft aus der Umgebung ins Lagerelement 7 gesaugt wird.

In der Grenzschicht 9 herrscht, da der Außenring 1 nicht dreht, der Umgebungsdruck pₒ, der durch den Druck p_{z} aus der Zentrifugalbeschleunigung aus der Innenringdrehung und der Drehung der Wälzkörper 3 und dem Käfig 4 erhöht wird. P_{z} aus der Zentrifugalbeschleunigung ist bei üblichen Betriebsverhältnissen der Lagerung höher als pᵥ, so daß die Luft an den Wälzkörpern 3 vorbei nach außen strömt und zum Ring 5 hin abgelenkt wird. In der Grenzschicht des Distanzrings 5 einschließlich des porösen Elements 6 herrscht pₒ, daher strömt wegen der Druckdifferenz p_{z} + pᵥ die Luft entlang des porösen Rings 6 radial in Richtung 27 und transportiert Schmiermittel aus dem porösen Element 6 mit, das in Richtung Wälzkörper 3 wandert.

Nach Durchströmen des Käfigs 4 wird das Schmiermittel in der Grenzschicht 9 gesammelt und in den porösen Ring 6 zurücktransportiert. Somit entsteht ein interner Schmiermittelkreislauf. Das poröse Element 6 kann auch beidseitig angeordnet werden (nicht abgebildet).

Dabei ist der Ring 6 aus porösem Material mit axialen Fortsätzen 24 und 25 versehen, die den Käfig 4 radial außen und innen umschließen.

Der äußere Fortsatz 24 des porösen Elements 6 hat einen minimalen radialen Spalt 26 zum Innendurchmesser des Außenrings 1 bzw. ist nur mit einigen Zentrierpunkten oder einem schmalen außenliegenden Zentrierbund im Außenring 1 fixiert.

Die Kapillarwirkung in dem engen Spalt 26 fördert Öl aus dem porösen Element 6 nach außen in Richtung Wälzkörperlauffläche und sorgt bei nicht oder langsam rotierendem Lager für einen Schmierfilm im Kontaktbereich des Wälzkörpers 3 und der Ringlauffläche.

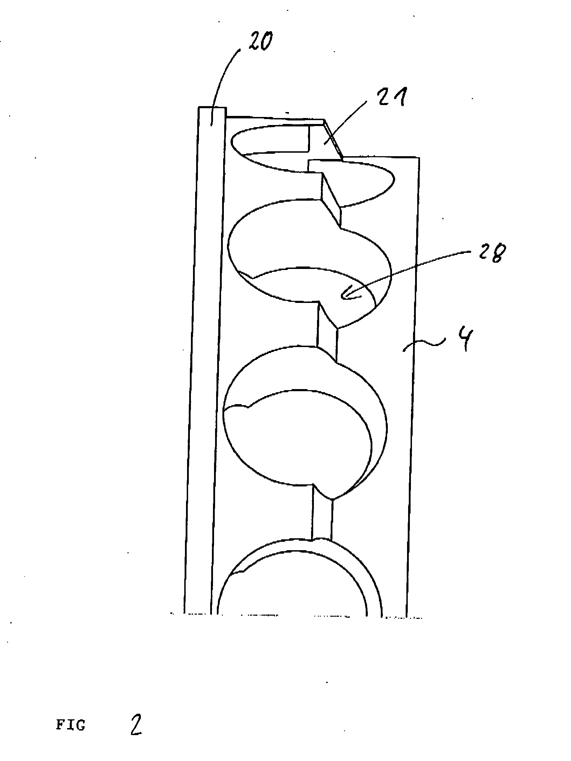

Der Käfig 4 in Fig. 2 ist einseitig mit dem Zentrierbund 20 am Borddurchmesser des Außenrings geführt und hat im Wälzlagerbereich an den Stegen 23 zwischen den Öffnungen (Kugeltaschen) 28 kurze, strömungsgünstige gestaltete Vorsprünge 21, welche die durch Öffnungen 28 geleitete Luft zusätzlich radial beschleunigt und damit den Schmiermittelfluß in diesem Bereich konzentrieren.

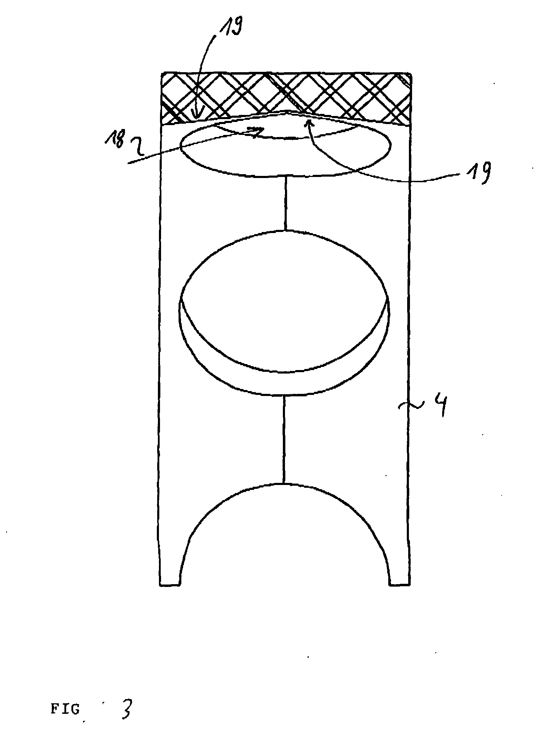

Fig. 3 zeigt eine vorteilhafte Ausführung des Käfigs 4, bei der durch die zur Käfigmitte hin konische Verjüngung 19 das zugeführte Schmiermittel in Richtung 18 in den Kontaktbereich von Wälzkörpern 3 (nicht abgebildet) und Laufbahn von Außenring 1 (nicht abgebildet) geleitet wird.

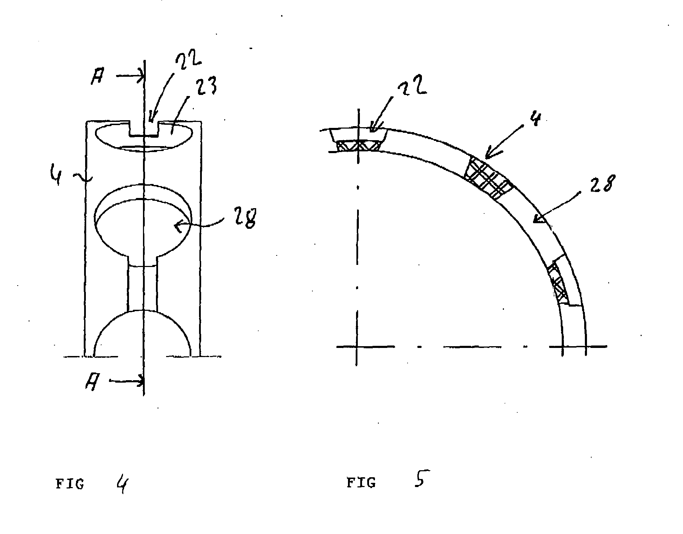

Beim Käfig 4 nach Fig. 4 und Fig. 5 ist jeder zweite Steg 23 zwischen den Öffnungen 28 an der engsten Stelle radial verkürzt, z.B. durch Kerben 22, um die Förderwirkung der Luft im Kugelscheitel zu erhöhen und damit den Schmiermittelfluß zu konzentrieren.

### BEZUGSZEICHEN

- 1: Außenring
- 2: Innenring
- 3: Wälzkörper
- 4: Käfig
- 5: Distanzring
- 6: poröses Element
- 7: Lagerelement
- 8: Spalt
- 9: Grenzschicht
- 10: Lagerring
- 12: Ring
- 13: poröses Element
- 14: Dichtscheibe
- 15: Dichtscheibe
- 16: poröses Element
- 17: Innenbord
- 18: Richtung
- 19: Verjüngung
- 20: Zentrierbund
- 21: Vorsprung
- 22: Kerbe
- 23: Steg
- 24: Fortsatz
- 25: Fortsatz
- 26: Spalt
- 27: Richtung
- 28: Öffnung

## Patentansprüche

1. Lagerelement mit Wälzkörpern (3), mit einer inneren Laufbahn, einer äußeren Laufbahn und zwischen der inneren und der äußeren Laufbahn drehbar angeordneten benachbarten Wälzkörpern (3), mit einem Käfig (4) zur Halterung der Wälzkörper, wobei mindestens ein poröses Element (6, 13, 16) zur Aufnahme von Schmiermittel für das Lagerelement (7) vorgesehen ist,
wobei das poröse Element (6, 13, 16) in einem Zwischenraum zwischen Außenring (1) und Innenring (2) des Lagerelements (7) angebracht ist
und mit axialen Fortsätzen (24, 25) versehen ist, die den Käfig (4) radial außen und innen umschließen.

2. Lagerelement nach Anspruch 1 , wobei der Käfig (4) des Lagerelements (7) eine strömungstechnisch optimierte Form aufweist.

3. Lagerelement nach einem der vorhergehenden Ansprüche, wobei der Käfig (4) des Lagerelements (7) mindestens ein Flügelelement aufweist.

4. Lagerelement nach einem der vorhergehenden Ansprüche, wobei zwischen dem porösen Element (6, 13, 16) und dem Außenring (1) oder Innenring (2) des Lagerelements (7) ein Spalt (8) zur Zuführung von Schmiermittel, insbesondere zur Ausbildung einer Schmiermittelströmung, vorgesehen ist.

## Claims

1. Bearing element with rolling bodies (3), having an inner raceway, an outer raceway and adjacent rolling bodies (3) which are arranged rotatably between the inner and the outer raceway, having a cage (4) for holding the rolling bodies, at least one porous element (6, 13, 16) being provided for receiving lubricant for the bearing element (7), the porous element (6, 13, 16) being attached in an intermediate space between the outer ring (1) and the inner ring (2) of the bearing element (7) and being provided with axial projections (24, 25) which enclose the cage (4) radially on the outside and inside.

2. Bearing element according to Claim 1, the cage (4) of the bearing element (7) having a shape which is optimized in flow terms.

3. Bearing element according to one of the preceding claims, the cage (4) of the bearing element (7) having at least one vane element.

4. Bearing element according to one of the preceding claims, a gap (8) for feeding lubricant, in particular for forming a lubricant flow, being provided between the porous element (6, 13, 16) and the outer ring (1) or inner ring (2) of the bearing element (7).

## Revendications

1. Elément de palier avec des corps de roulement (3), comprenant un chemin de roulement interne, un chemin de roulement externe, et des corps de roulement (3) disposés à rotation entre les chemins de roulement interne et externe, avec une cage (4) pour retenir les corps de roulement, au moins un élément poreux (6, 13, 16) étant prévu pour recevoir du lubrifiant pour l'élément de palier (7),
l'élément poreux (6, 13, 16) étant monté dans un espace intermédiaire entre la bague extérieure (1) et la bague intérieure (2) de l'élément de palier (7), et étant pourvu de saillies axiales (24, 25), qui entourent radialement à l'extérieur et à l'intérieur la cage (4).

2. Elément de palier selon la revendication 1, dans lequel la cage (4) de l'élément de palier (7) présente une forme optimisée du point de vue de la technique des fluides.

3. Elément de palier selon l'une quelconque des revendications précédentes, dans lequel la cage (4) de l'élément de palier (7) présente au moins un élément formant ailette.

4. Elément de palier selon l'une quelconque des revendications précédentes, dans lequel une fente (8) est prévue entre l'élément poreux (6, 13, 16) et la bague extérieure (1) ou la bague intérieure (2) de l'élément de palier (7) pour l'alimentation en lubrifiant, notamment pour la réalisation d'un écoulement de lubrifiant.
